## Europäisches Patentamt

## European Patent Office
## Office européen des brevets

(19)

(11) Publication number: **0 178 837**
**A2**

(12)

# EUROPEAN PATENT APPLICATION

(21) Application number: **85307188.4**

(22) Date of filing: **08.10.85**

(51) Int. Cl.⁴: **C 04 B 35/44**
**C 04 B 35/66**

(30) Priority: **09.10.84 US 659155**

(43) Date of publication of application:
**23.04.86 Bulletin 86/17**

(84) Designated Contracting States:
**AT BE CH DE FR GB IT LI LU NL SE**

(71) Applicant: **THE DOW CHEMICAL COMPANY**
2030 Dow Center Abbott Road P.O. Box 1967
Midland, MI 48640(US)

(72) Inventor: **Cisar, Alan James**
2546 Coopers Post Lane
Sugar Land Texas 77478(US)

(74) Representative: **Raynor, John et al,**
W.H. Beck, Greener & Co 7 Stone Buildings Lincoln's Inn
London WC2A 3SZ(GB)

(54) Low density phosphate bonded spinel refractories and process for their preparation.

(57) Ceramic compositions having a relatively low density, thermal insulating properties, high structural strength and resilancies to chemical attack are disclosed. These compositions can be used to produce monolithic insulating installations or insulating shapes.

EP 0 178 837 A2

## LOW DENSITY PHOSPHATE BONDED
## SPINEL REFRACTORIES AND
## PROCESS FOR THEIR PREPARATION

The present invention concerns magnesium aluminum oxide spinel compositions for use as a light weight casting mold and thermal insulation that has high structural strength and resistance to chemical attack.

The following patents and literature references represent some aspects of the general field of magnesium aluminum oxide spinels used in mortars, castables and coatings and the like employing phosphorous acids as a reactive component. U.S. Patent 3,730,744, employing fuzed magnesium aluminate, discloses an aggregate in cast shapes employing $Al(H_2PO_4)_3$ as the bonding solution which contains alkalizing ions as the curing agents. U.S. Patent 3,285,758 teaches ammonium phosphate in combination with aluminum phosphate plus MgO (calcined dolomite) where spinel is mentioned as an aggregate. U.S. Patent 4,341,561 teaches the production of foamed refractories using hydraulic cements, some of which also contain phosphate materials. U. S. Patent 4,459,156 discloses that a reactive spinel may be one of the components of the mortar. The use of a non-reactive gas autogenerated compound is not disclosed.

0178837

A fundamental review of phosphate bonding is found in J. AMER. CERAMIC SOCIETY, Vol. 133, No. 8, August 1, 1950 by William David Kingery. Another review is found in Ceramic Bulletin, Vol. 56, No. 7, page 640 by J.E. Cassidy (1977). Other studies are as follows: Ceramic Bulletin, Vol 59, No. 7 (1980) by Francisco J. Gonzales and John W. Halloran, "Reaction of Orthophosphoric Acid with Several Forms of Aluminum Oxide" and an abstract of a Russian Scientific paper authored by L. B. Khoroshavin, V. A. Ryabin, I. E. Sipeiko, V. N. Naumov, G. A. Sychev, V. Ya. Pavlov, V. M. Chyrin, N. F. Serenko, B. V. Ponomarev, and E. P. Kosolapova, Eastern Institute of Refractories, Ural Scientific-Research Institute of Chemistry, Perm Chemical Plant, All-Union Scientific-Research Institute for the Power Supply in Nonferrous Metallurgy, from Ogneupory, No. 3, pp. 34-36, March, 1977 (translated).

The above two review articles, the one by Kingery (covering the art to 1949) and the other by Cassidy (from 1949-1977) form a very complete picture of the state of technology on phosphate bonding. Materials listed as forming phosphate bonds with phosphoric acid are: $TiO_2$, $CaO$, $FeO$, $Fe_2O_3$, $NiO$, $ZnO$, $ZrO_2$, $MgO$, $Al_2O_3$, and $CrO_3$. These may be reacted as pure compounds or as constituents in mineral compositions, i.e., asbestos, bauxite or clay. The most common bonding mechanism using phosphoric acid is the reaction with alumina to form $Al(H_2PO_4)_3$, which is also the starting material in many formulations in place of $H_3PO_4$. $Al(H_2PO_4)_3$ further reacts with either alumina, clay or bauxite, resulting in orthophosphates ($MgHPO_4 \cdot 3H_2O$ or $AlH_3(PO_4)_2$) as the bond.

In the $H_3PO_4$ + $Al_2O_3$ system addition of $Mg^{+2}$, $Fe^{+3}$ or $Be^{+2}$ ions increase bonding strength but these ions also contribute to "premature" setting.

The patent literature very closely follows the above literature review; that is, while it teaches phosphate bonded systems, it only mentions spinel as one possible aggregate material. Also these aggregates are not "reactive" with any activity observed due to free MgO and are typically part of the coarse grained portion with very few fines (material <325 mesh).

In accordance with the present invention, effective compositions can be produced to serve as thermal insulation which have high structural strength and resistance to chemical attack. These compositions can be used to produce monolithic insulating installations or insulating shapes. The ingredients for producing the present compositions are (a) a reactive $MgAl_2O_4$ spinel or spinels, (b) optionally, non-reactive fillers, (c) a non-reactive gas auto-generating compound means of introducing void volume (d) aluminum acid phosphate moieties and/or phosphoric acid, (e) water, and (f) optionally, handling agents.

The present invention includes a castable composition which is particularly usable in the metals industry for construction and repair of low density or insulating structures, linings and component parts, for example, in melting furnaces, electrolytic metal winning cells, component parts for metal casting machines, including transfer pipes, troughs, and the like, as well as low density refractory structures in the chemical and petrochemical industry.

The present invention concerns compositions comprising:

(a)   10 to 80 percent by weight of a reactive $MgAl_2O_4$ spinel or mixture of reactive $MgAl_2O_4$ spinels which have been calcined to different temperatures and prepared by coprecipitating water-soluble magnesium and aluminum salts in a proportion to provide about 1 magnesium atom per 2 aluminum atoms; .

(b)   preferably, from 0 to 50 per cent by weight of a substantially non-reactive filler;

(c)   a non-reactive gas autogenerated from 1 to 40 percent by weight of a compound which decomposes under acidic conditions and generates gas within said composition;

(d)   1 to 20 percent by weight of an inorganic phosphorous compound which forms $(PO_3)_3^-$ moieties on heating at above about 200°C;

(e)   8 to 40 percent by weight of water; and

(f)   preferably, from 0 to 5 per cent by weight of handling agents.

The $MgAl_2O_4$ spinels of component (a) are preferably prepared in accordance with the teachings of U.S. Patent 4,400,431. Such spinels have been calcined and may be sintered to at least about 1600°C. The preferred spinel is a mixture where one $MgAl_2O_4$ spinel has been calcined to about 900°C and the other spinel at about 1600°C. When only one spinel is present, preferably the spinel has been calcined to 1600°C.

The non-reactive filler of component (b) is typically highly sintered such as tabular alumina, fused grain alumina, fused grain spinel ($MgAl_2O_4$), highly sintered $MgAl_2O_4$ (for example as made in accordance with U.S. U.S. Patent 4,400,431), as well as other fused grain materials such as $ZrSiO_4$.

The non-reactive gas forming compound decomposes on contact with the acidic component and generates gas to produce bubbles, which serve as void volume to reduce the fired density and give the product an insulating character, and is preferably a $CO_2$ producing agent. The $CO_2$ producing agent may be any acid decomposable carbonate such as dolomite or magnesium carbonate. While other alkali metal or alkaline earth metal carbonates may be employed they introduce components which may degrade the physical properties of the casting. One way to avoid these problems is to use a $MgAl(HCO_3)_xOH_y$ (x + y to balance positive valence) compound prepared in accordance with U.S. Patent 4,400,431. Preferred compounds are dolomite and $MgAl(OH)_{4.5}(HCO_3)_{0.5}$.

The inorganic phosphorous compound of component (d) should be capable of forming $(PO_3)_3^-$ moieties on heating, i.e. on drying out of the formulation, at above about 200°C. Preferred phosphorous compounds are $Al(H_2PO_4)_3$ and $H_3PO_4$.

Water is employed (component (e)) as necessary to give workability to the binder composition, as are handling agents (including modifiers) (component (f)). Total water content usually employed is from about 8 to about 40 weight percent of the total composition.

Handling agents, including set modifiers, (component (f)) suitable for use herein include activated alumina, fumed alumina ($Al_2O_3$), glycerine, polyvinyl alcohol, MgO, $Mg(OH)_2$, $MgO/MgAl_2O_4$ mixtures or mixtures of two or more, employed in from 0 to about 5 weight percent of the total composition. Other well-known handling agents may be employed.

In the following examples, unless otherwise denoted, the reactive $MgAl_2O_4$ spinel is derived from a coprecipitation process in which a mixture of magnesium aluminum hydroxides ($Mg_xAl_y(OH)_z$) and aluminum hydroxides and/or aluminum oxyhydroxides are produced and thereafter calcined to between about 700°C and about 1650°C. The magnesium aluminum hydroxide phase represented above may contain other anions partially substituting for hydroxide (e.g. $Cl^-$, $NO_3^-$, $SO_4^=$, $CO_3^=$), the presence and amount of which will be determined by the type of reactant salts used in the coprecipitation and the type and duration of subsequent treatments, chemical or thermal, to which the precipitate phase has been subjected. The precipitate of magnesium/aluminum and aluminum hydroxy compounds is referred to as spinel precursor. The overall Al/Mg ratio with this mixture will be very nearly 2.0, unless otherwise noted. If this ratio significantly deviates from 2.0 (e.g. <1.90 or >2.10) segregated MgO and/or $Al_2O_3$ phases are normally observed in the calcined or sintered product and these can affect reactivity.

The $Al(H_2PO_4)_3$, $H_3PO_4$, fused grain $Al_2O_3$, fumed alumina, porous alumina, and fibrous alumina are all commercially available, substantially pure compounds and/or solutions. The sintered spinels may be commercially available fused grain material or a highly sintered, (above 1650°C), spinel prepared in accordance with U.S. Patent 4,400,431.

Formulations may consist of two main parts. The binder phase, produced by reacting an acidic phosphate species with at least one active oxide species, is the first part. The aggregate phase, which contains

the $CO_2$ producing agent, is the second part. The binder phase is often prepared out prior to the addition of the aggregate or filler material which latter component(s) may be inert, as in the case of fused grain, tabular, or fibrous $Al_2O_3$, or highly sintered (>1650°C) $MgAl_2O_4$, or may have some degree of reactivity, as in the case of $MgAl_2O_4$ sintered to ≤1650°C or calcined $Al_2O_3$. This activity is due to changes in surface area, degree of crystalline perfection and/or population of surface hydroxyls available for reaction.

EXAMPLE 1

Magnesium aluminum spinel, 7.6 g, calcined at 900°C and sized to pass through a U.S. standard 100 mesh seive was suspended in a solution of 11.8 g. $Al(H_2PO_4)_3$ in 13.2 grams $H_2O$. 11.0 g. of spinel sintered at ∿1600°C was added and the slurry set aside. In a separate container 75 grams of a mixture produced by ball milling 30 g of dolomite ($MgCa(CO_3)_2$) together with 100 grams of magnesium aluminum spinel sintered at ∿1600°C was slurried in 20 grams $H_2O$. The two slurries are mixed and immediately react, with $CO_2$ gas being generated by the action of the acidic aluminum phosphate on the dolomite. The product expands by a factor of 2 in volume, and sets in about 4 minutes. After firing, it has a density of 0.66 g/cm³ (41 lb/ft³). This material is especially useful as a back-up refractory foamed in place to fill unusual, irregular, or difficult to access spaces.

EXAMPLE 2

Magnesium aluminum spinel, 120 grams, calcined at 1600°C was mixed with 40 grams sintered $Al_2O_3$ then added to a solution of 35 grams of 85% $H_3PO_4$ and

10 grams water. Thereafter 50 grams of $Mg_2Al_3(OH)_{4.5}$-$(HCO_3)_{0.5}$ was slurried in 60 grams of water. The two slurries were mixed and the volume doubled. The mixture set in about 4 minutes.

The above compositions are preferably fired to a temperature of at least $200^{\circ}C$.

- 9 -

## CLAIMS

1.   A composition comprising:

(1)   10 to 80 per cent by weight of a reactive $MgAl_2O_4$ spinel or mixture of reactive $MgAl_2O_4$ spinels which have been calcined to different temperatures, and prepared by coprecipitating water-soluble magnesium and aluminum salts in a proportion to provide about 1 magnesium atom per 2 aluminum atoms;

(2)   a non-reactive gas autogenerated from 1 to 40 per cent by weight of a compound which decomposes under acidic conditions and generates a gas within said composition;

(3)   1 to 20 per cent by weight of an inorganic phosphorous compound which forms $(PO_3)_3^-$ moeties on heating at above about 200°C; and

(4)   8 to 40 per cent by weight of water.

2.   A composition as claimed in claim 1, which also comprises a substantially non-reactive filter in an amount of up to 50 per cent by weight of the composition.

3.   A composition as claimed in claim 1 or claim 2, which also comprises a handling agent, in an amount of up to 5 per cent of the composition.

4.   A composition as claimed in any one of the preceding claims wherein said $MgAl_2O_4$ of component

- 10 -

(1) is a mixture of a first spinel which has been calcined to about 900°C and a second spinel which has been calcined to about 1600°C.

5.   A composition as claimed in any one of the preceding claims, wherein the phosphorous compound is $Al(H_2PO_4)_3$.

6.   A composition as claimed in any one of the preceding claims, wherein the gas producing compound is dolomite.

7.   A composition as claimed in any one of the preceding claims, wherein the $MgAl_2O_4$ of component (1) has been calcined to 1600°C, the phosphorous compound is $H_3PO_4$ and the gas producing compound is $MgAl(OH)_{4.5}(HCO_3)_{0.5}$.

8.   A process for producing a porous refractory composition, which process comprises forming an aqueous suspension comprising,

   (1)   10 to 80 per cent by weight of a reactive $MgAl_2O_4$ spinel or mixture of reactive $MgAl_2O_4$ spinels which have been calcined to different temperatures and prepared by coprecipitating water-soluble magnesium and aluminum salts in a proportion to provide about 1 magnesium atom per 2 aluminum atoms;

   (2)   from 1 to 40 per cent by weight of a compound which decomposes under acidic conditions to form a gas;

(3)     1 to 20 per cent by weight of an inorganic
phosphorous compound which forms $(PO_3)_3^-$ moeties on
heating at above about 200°C; and

(4)     8 to 40 per cent by weight of water,
and allowing the components to react to form a porous
refractory composition.

9.     A process for making a fired refractory material,
which process comprises forming a porous refractory
composition by a method as claimed in claim 8, and
subsequently firing the composition.